# EUROPEAN PATENT APPLICATION

(11) **EP 1 528 381 A1**
(43) Date of publication of application: **04.05.2005**
(21) Application number: 03024859.5
(22) Date of filing: 31.10.2003
(51) Int. Cl.: G01K 13/00, G01K 1/08

(54) **Thermometer with two operating modes, device for resetting a thermometer, system comprising a thermometer and a resetting device and a method for resetting a thermometer**

(71) Applicant: Microlife Intellectual Property GmbH, 9435 Heerbrugg (CH)
(72) Inventor: Frick, Gerhard, 6800 Feldkirch (AT); Diegel, Uwe, c/o Microlife France, 75009 Paris (FR)
(74) Representative: Müller, Christoph Emanuel

(57) **Abstract**

The invention relates to a system comprising a digital medical thermometer (1) and a device (2) for resetting said thermometer (1). Said thermometer (1) has at least two operating modes, a first operational mode and a second non-operational mode. Further it comprises a receiver unit (6) adapted for receiving a reset signal and an electrical controlling unit. This controlling unit has means for setting the thermometer (1) into the second non-operational mode after a temperature measurement, means for identifying the reset signal and means for resetting the thermometer (1) into the first operational mode when said signal fulfils a predetermined criterion. The device (2) for resetting the thermometer (1) into the operational mode has a transmitter (7) to send a signal to the thermometer (1). The receiver unit (6) of the thermometer (1) is adapted to receive the signal of the transmitter (7).

## Description

The invention relates to a medical thermometer having two operating modes, the use of a device to reset the thermometer into one of these modes, a system comprising a thermometer and resetting device and a method for resetting said thermometer according to the independent patent claims.

For many reasons it is important to know the body temperature of a patient. Thus the use of medical thermometers is indispensable, particularly in hospitals or surgeries. As it is very important to minimise the risk of contamination between patients, a medical thermometer should either be used with a new probe cover for every measurement, or be disinfected each time after use, especially in places where many different and serious diseases are around. In the state of the art every user is responsible by himself to disinfect the thermometer. But especially if there are many users it is difficult to maintain the survey and grant the cleanliness of each thermometer.

Further, until now many hospitals stick to conventional mercury thermometers because of thievery. But especially for large numbers of patients it would be much more efficient to use faster digital thermometers. As they are more expensive, a efficient anti-theft device on the thermometer would be advantageous.

It is an object of the present invention to overcome these disadvantages, especially to provide a simple but effective system which enables the user to ensure that the disinfection was performed and which simultaneously reduces the risk of thievery.

According to the present invention, these objects are resolved with a digital medical thermometer having two operating modes, a resetting device, a system comprising a digital thermometer having two operating modes and a resetting device, and a method to reset the thermometer according to the independent patent claims.

The thermometer according to the invention is designed to operate in two different modes, a first operational mode and a second non-operational mode. During the operational mode it is possible to complete a temperature measurement, during the non-operational mode the thermometer is blocked and no temperature measurements can be made. It is conceivable, that during the non-operational mode the data of the last measurements still can be accessible as far as it is saved on a internal memory of the thermometer.

The thermometer comprises an electrical controlling unit which is apt to set the thermometer in the non-operational mode after a predefined number of temperature measurements, e.g. after each measurement or after a certain number of measurements.

The thermometer can be designed having a temperature sensor on a tip and a housing with a display unit where the temperature value of a temperature measurement can be read off. A on/off-button to turn the display on and off may be embedded as well. Instead of a thermometer having a temperature sensor on the tip other thermometers, e.g. a infrared based thermometers, are conceivable as well. The thermometer may contain a memory unit to save the data of at least one temperature measurement for a certain time or also until the next temperature measurement is being stored.

Further, the thermometer contains a receiver unit which is adapted for receiving an incoming resetting signal. This signal can be of any kind, such as a radio signal, an optical signal, an acoustic signal, a electric or magnetic impulse or a mechanical vibration, even the pattern of a mechanical key can serve as a signal. Any kind of a input device is considered as a receiver unit, besides a conventional radio signal receiver a lock for a mechanical or electrical key or a even a button to be pressed in a predetermined pattern can act as a receiver unit according to the invention.

The electrical controlling unit is preferably designed to analyse and identify the signal. If the signal corresponds to a certain predetermined pattern or criterion, the controlling unit sets the thermometer into the operational mode again. This pattern or criterion can simply be characterised by the presence of a signal or by a characteristic value of the signal, e.g. the wavelength or frequency of the signal, eventually in combination with its amplitude, duration or intensity. But it is also possible that the signal is encoded with more a complicated, preferably wavelength or frequency depending pattern which is difficult to reproduce. In that way the thermometer can only be reset to the operational mode with this specific, in a predetermined way encoded signal coming from a certain source.

In a preferred embodiment, the thermometer is automatically set into the non-operational mode after every temperature measurement. But it is also conceivable to initiate the non-operational mode only after a certain number of measurements. In the context of the present invention, a measurement is defined when a predefined temperature value is achieved (e.g. 32°C).

During the non-operational mode, the temperature value of the last measurement could be freezed on the display at least for a certain time. As an advantage of this realisation the value of the last temperature measurement can easily be read off.

To reset the thermometer into the operational mode, a device is provided which has to be used and which is comprising a transmitter to send a signal to the thermometer. Depending on the receiver of the thermometer, this signal can be of any kind as described before. The transmitter according to the invention has to be understood in a very general way. Besides a conventional radio or optical signal transmitter a mechanical or electrical key or even a mechanical vibrator can act as a transmitter. This list of transmitters serves as illustration and is not to be considered exhaustive.

The signal sent by the transmitter can be activated permanently or switched on manually. But it is also conceivable, that the receiver activates the generation of the signal, e.g. if it is an electrical signal which is activated by a direct contact between transmitter and receiver.

In a preferred embodiment, the device for resetting the thermometer is associated to a disinfecting device adapted to disinfect the thermometer. E.g. this disinfecting device may be a disinfecting bath, a disinfecting spray or an ultraviolet lamp.

The system according to the invention comprises a medical thermometer as described above and a device to reset it into the operational mode from the non-operational mode. This system offers a simple way to protect the thermometer against thievery as the thermometer can only be reset into the operational mode, if the receiver unit gets a signal which can be identified by the electrical controlling unit. To a non authorised person the thermometer is of no use because he or she can not reset it into the operational mode. As the resetting device is not open to the public but only to the user of the thermometer, e.g. the hospital staff, it is improbable to the thermometer to be stolen.

The receiver unit of the thermometer has to be adapted to receive the signal of the transmitter. E.g. if the transmitter is a radio transmitter, the receiver has to be a radio signal receiver, and if the signal is somehow encoded, the receiver has to be sensitive enough to detect the encoding.

In a preferred embodiment, the resetting device is associated to a disinfecting device, e.g. a disinfecting bath or spray or an ultraviolet lamp. Thus, the hygiene can be improved in a simple way. Preferably, the thermometer can only be reset after or during being disinfected. In the most preferred embodiment, it has to be disinfected after every temperature measurement to ensure maximal protection from contamination between different patients. This can be realised, e.g. in case of a radio transmitter, if the transmitter has a limited power such that the thermometer needs to be brought into proximity of the transmitter. By arranging the disinfecting device near the transmitter, the thermometer is disinfected automatically by bringing it into proximity of the transmitter.

A method for resetting the digital medical thermometer as characterised above from the non-operational to the operational mode is characterised by the following steps:
- sending an external signal from a resetting device to the thermometer;
- receiving the signal in the receiver unit;
- identifying the signal in the electrical controlling device;
- resetting the thermometer into an operational mode by the electrical controlling unit in dependence of the signal.

The above-mentioned dual mode thermometer can be implemented in a standard thermometer on an integrated circuit. It is thus possible to activate this dual mode operation by a factory setting. Depending on whether a certain thermometer is used for home use or for public, e.g. hospital use, the dual mode operation may be inactivated or activated. The same integrated circuits may be used for both types of thermometers.

It is an advantage of this method, that the resetting can only be performed by using a resetting device that is assigned to the thermometer. On the one hand, this method serves as a protection against thievery as the resetting device should not be open to the public.

On the other hand, with this method the hygiene can be improved in a simple way if the resetting device is associated to a disinfecting device, e.g. a disinfecting bath or spray or an ultraviolet lamp. For guaranteeing the cleanliness of the thermometer, the signal from the transmitter may only be sent if the thermometer has been disinfected before. As an example, the signal can be activated by a sensor which is situated on the bottom of a disinfecting bath or beneath an ultraviolet lamp. This sensor is activated if the tip of the thermometer reaches it, obviously being in the disinfecting solution or under the ultraviolet lamp which could be turned on with the same sensor.

While the invention is especially suitable for medical thermometers, it might also be useful for other medical or non medical measuring devices where there are concerns in view of thievery or hygiene.

The invention will now be described more in detail in conjunction with the accompanying drawings which show:
- Figure 1:: a schematic representation of the digital medical thermometer with a receiver unit and a resetting de vice with a transmitter
- Figure 2:: a schematic representation of the electrical controlling unit inside the thermometer
- Figure 3:: a schematic representation of the resetting device associated to a disinfecting bath in a front view
- Figure 4a:: a schematic representation of the thermometer before being disinfected and reset by the resetting device
- Figure 4b:: a schematic representation of the thermometer when disinfected and reset by the resetting device

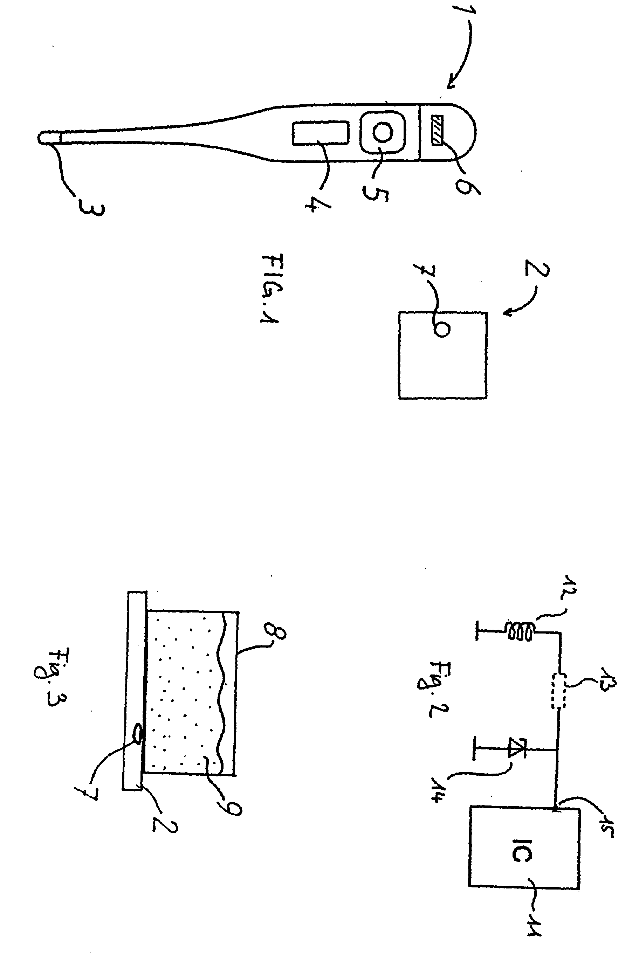

In figure 1 a medical thermometer 1 and a resetting device 2 according to the invention are schematically represented. The thermometer comprises a temperature sensor (not shown) in the tip 3, a display 4 for displaying a temperature value, a conventional on/off-button 5 and a receiving unit 6. The on/off-button 5 serves to turn the thermometer and/or the display off in order to save energy. This off-state is not to be confused with the non-operational mode of the thermometer. Pressing the on/off-button 5 does not change the mode (operational or non-operational) of the thermometer, this can only be performed by an electrical controlling unit (not shown in this figure) inside the thermometer.

The resetting device 2 comprises a transmitter 7, other features as the activating button for the transmitter are not shown in this figure. As a transmitter, a simple high frequency transmitter, emitting e.g. at a frequency of 13,56 MHZ may be used. Typically, a transmitter which continuously emits a signal may be used with relatively small power. The power may e.g. be selected in such a way that a signal may only be received in a distance shorter than e.g. 20 cm away from the transmitter. The transmitter may comprise a metal pad acting as a antenna which may have a size of about 20 x 30 cm.

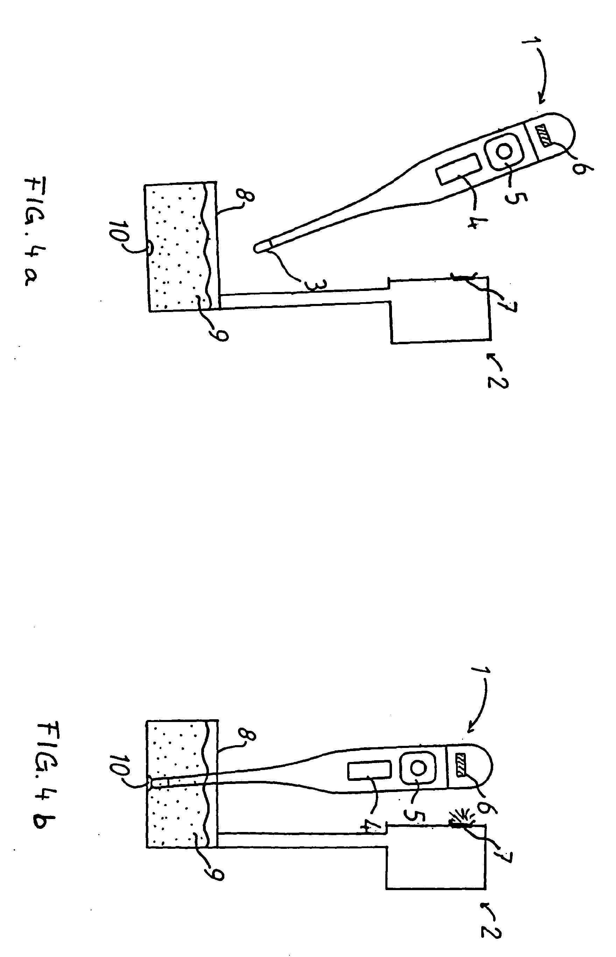

Figure 2 is a schematic representation of the electrical controlling unit inside the thermometer. The electrical controlling unit of the thermometer comprises a microprocessor 11. The microprocessor is designed as an ordinary microprocessor used for electronic thermometers. The microprocessor has an input pin 15 for resetting the thermometer into the first operational mode. Typically, the thermometer may be reset into the operational mode when a certain voltage is applied to this input pin 15. The controlling unit may be formed by a circuit comprised of an inductivity such as a coil 12, a resistor 13 and a zener diode as shown in figure 2. The inductivity is designed in such a way that high frequency signal of e.g. 13,56 MHZ creates a current and thus a signal transmitted to the input pin 15. The resistor may be necessary depending on the specific voltages and the design of the microprocessor 11. The zener diode may be necessary for limiting voltages. Especially, it may be useful in order to provide a clear signal on the input pin 15 only if a current above a predetermined threshold is created by the inductivity. Inductivity 12 may be realised as an ordinary coil. It may also be integrated into a integrated circuit. The same applies also to the resistor 13 and the diode 14.

In figure 3 a preferred embodiment of the resetting device 2 is shown in front view. The device 2 is associated to a disinfecting bath 8, containing a disinfecting solution 9. The transmitter 7 is placed underneath the bath 8 in such a way, that the thermometer has to be dipped into the disinfecting solution to be reset.

In figure 4a the thermometer has been used to perform a temperature measurement and was automatically switched into the non-operational mode after this measurement. To get reset into the operational mode, the thermometer has to be dipped into the disinfecting solution as shown in figure 4b. When the tip of the thermometer reaches the button, the transmitter sends a signal, and the thermometer is reset into the operational mode again. Instead of a button 10 it is also possible to place the bath onto a pad or plate like antenna. Only because of proximity between the receiver in the thermometer and the transmitter below the disinfecting bath, the thermometer is reset if and only if it is placed in the bath.

## Claims

1. A digital medical thermometer (1) for measuring the temperature of a patient, said thermometer (1) having at least two operating modes, a first operational mode and a second non-operational mode,
comprising
- a receiver unit (6) adapted for receiving a reset signal;
- an electrical controlling unit having means for setting the thermometer (1) into the second non-operational mode after a temperature measurement, means for identifying the reset signal and means for resetting the thermometer (1) into the first operational mode when said signal fulfils a predetermined criterion.

2. A medical thermometer according to claim 1, **characterised in that** during the non-operational mode the temperature value of the last measurement is freezed on a display (4) for at least a certain period of time.

3. A thermometer according to claim 1, **characterised in that** said receiver unit (6) is a radio signal receiver or an optical signal receiver.

4. The use of a device (2) having a transmitter (7) to send a specified signal adapted to be received by a medical thermometer (1) for resetting the thermometer (1) from a second non-operational mode into a first operational mode.

5. A device according to claim 4, **characterised in that** said transmitter (7) is a radio signal transmitter or an optical signal transmitter.

6. A device according to claim 4, **characterised in that** it has a disinfecting device associated thereto.

7. A device according to claim 6, **characterised in that** the disinfecting device is a disinfecting bath (8) for a medical thermometer.

8. A system comprising a digital medical thermometer (1) and a device (2) for resetting said thermometer (1),
wherein the thermometer (1) has at least two operating modes, a first operational mode and a second non-operational mode and has
- a receiver unit (6) adapted for receiving a reset signal;
- an electrical controlling unit having means for setting the thermometer (1) into the second non-operational mode after a temperature measurement, means for identifying the reset signal and means for resetting the thermometer (1) into the first operational mode when said signal fulfils a predetermined criterion and the device (2) for resetting the thermometer (1) into the operational mode comprises a transmitter (7) to send a signal to the thermometer (1) and wherein the receiver unit (6) of the thermometer (1) is adapted to receive the signal of the transmitter (7).

9. A system according to claim 8, **characterised in that** the signal is a radio signal and the receiver unit (6) is a radio signal receiver or the signal is an optical signal and the receiver unit (6) is a optical receiver.

10. A system according to claim 8, **characterised in that** the device (2) for resetting the thermometer (1) is associated to a disinfecting device which is adapted to be used for disinfecting the thermometer (1).

11. A system according to claim 10, **characterised in that** the disinfecting device is a disinfecting bath (8) for the thermometer (1).

12. A method for resetting a digital medical thermometer (1) having a receiver unit (6) and an electrical controlling unit from a non-operational mode into an operational mode, said thermometer (1) being blocked in a non-operational mode by the electrical controlling unit after a performed measurement, **characterised by** the steps of
- sending an reset signal from a resetting device (2) to the thermometer (1);
- receiving the signal in the receiver unit (6);
- identifying the signal in the electrical controlling device;
- resetting the thermometer (1) into an operational mode by the electrical controlling unit when said signal fulfils a predetermined criterion.

13. A method according to claim 12, **characterised in that** the signal is only sent if the thermometer (1) is disinfected before or during being reset by a disinfecting device which is associated to the resetting device (2).

14. A method according to claim 13, **characterised in that** the thermometer (1) is put into a disinfecting bath (8) which is associated to the resetting device.
